# EUROPÄISCHE PATENTSCHRIFT

(11) **EP 3 194 050 B1**
(45) Veröffentlichungstag und Bekanntmachung des Hinweises auf die Patenterteilung: **13.06.2018**
(21) Anmeldenummer: 15763341.3
(22) Anmeldetag: 16.09.2015
(51) Int. Cl.: B01D 53/50, B01D 53/86, B01D 53/75, C01B 17/765

(54) **VERFAHREN ZUR KATALYTISCHEN ENTFERNUNG VON SCHWEFELDIOXID AUS ABGASEN**
METHOD FOR THE CATALYTIC REMOVAL OF SULPHUR DIOXIDE FROM EXHAUST GASES
PROCÉDÉ D'ÉLIMINATION CATALYTIQUE DU DIOXYDE DE SOUFRE CONTENU DANS DES GAZ D'ÉCHAPPEMENT

(30) Priorität: 17.09.2014 LU 92547
(43) Veröffentlichungstag der Anmeldung: 26.07.2017
(73) Patentinhaber: CPPE Carbon Process&Plant Engineering S.A., 1337 Luxembourg-Dommeldange (LU)
(72) Erfinder: STRICKROTH, Alain, L-4408 Belvaux (LU)
(74) Vertreter: Office Freylinger
(86) Internationale Anmeldenummer: PCT/EP2015/071153
(87) Internationale Veröffentlichungsnummer: WO 2016/042005

(56) Entgegenhaltungen:
- EP-A1- 2 404 654
- EP-A2- 0 367 998
- WO-A1-85/04343
- GB-A- 1 209 002
- JP-A- 2000 093 742
- US-A- 3 862 295
- US-A- 4 140 752
- US-A1- 2004 096 390

## Beschreibung

### Technisches Gebiet

Die vorliegende Erfindung betrifft allgemein ein Verfahren zur katalytischen Entfernung von Schwefeldioxid aus Abgasen.

### Stand der Technik

Am Anfang des 20. Jahrhunderts wurden die ersten Verfahren entwickelt, um aus Schwefeldioxid auf katalytischem Wege Schwefelsäure herzustellen. Aus diesen Entwicklungen gingen die ersten sogenannten Kontaktanlagen hervor, in denen hochprozentige (98-99%) Schwefelsäure hergestellt wurde. In einem ersten Schritt wird bei sehr hohen Temperaturen (300 - 500°C) SO₂ zu SO₃ oxidiert und in einem zweiten Schritt durch Zugabe von Wasser bei tieferen Temperaturen SO₃ zu H₂SO₄ umgewandelt. Diese sogenannten Kontaktanlagen wurden im Laufe der letzten Jahrzehnte von der Funktionsweise nur wenig verändert. Eine Verbesserung war u.a. die Einführung der Doppelkontaktanlage, die im Prinzip wie eine aus zwei in Serie geschaltete, (einfach)-Kontaktanlagen zu betrachten ist. Hierbei wurde der Wirkungsgrad und somit die Umsetzung von SO₂ zu H₂SO₄ auf über 99% erhöht.

In der EP 2 404 654 A1 wird z.B. ein solches Verfahren beschrieben, in dem SO₂ bei hoher Temperatur (von 300 °C und 700 °C) und bei hohem Druck (zwischen 2 bar und 50 bar) in zwei Etappen in H₂SO₄ umgewandelt wird. Spezifisch Metall-Oxide werden als bevorzugte Katalysatoren genannt.

Weitere Anlagen die zurzeit Stand der Technik sind, werden z.B. im Dokument "Stand der Technik in der Schwefelsäureerzeugung im Hinblick auf die IPPC-Richtlinie" von Herbert Wiesenberger und Joachim Kircher, Umweltbundesamt GmbH, Wien, 2001 oder in Ullmann's Encyclopedia of Industrial Chemistry, 5. Auflage, Band A 25, Seiten 635 bis 700 beschrieben.

Die wesentlichen Probleme dieser Kontaktanlagen sind:
1. Die Temperaturunterschiede für SO₂/SO₃ und SO₃/H₂SO₄ Umwandlungen, sowie die damit verbundenen Emissionsgrenzwertüberschreitungen beim Anfahren der Anlage.
2. Generelle Temperatur- und H₂SO₄-konzentrationsbedingte Korrosion der Anlagen und damit verbundene schlechte Zuverlässigkeit und schnelle Alterung von Kontaktanlagen.
3. Hohe Investitionskosten verbunden mit hohen operativen Kosten für Katalysatoraustausch und Reparaturen.
4. Kontaktanlagen benötigen Mindest-Konzentrationen für den SO₂-Eingang von über 3 vol % unterhalb der eine H₂SO₄ Umwandlung nicht funktioniert.
5. Systembedingt bestehen die Reaktoren wegen der hohen Katalyse-Temperaturen aus Edelstahl mit einem relativ großen Platzbedarf.

Eine interessante parallele Erfindung war in den 1960-iger Jahren das SULFACID® Verfahren. Bei diesem Verfahren wird auf einem Aktivkohlebett bei Umgebungstemperaturen SO₂ zu SO₃ oxidiert und durch gleichzeitige Zugabe von Wasser auf demselben Aktivkohlebett zu H₂SO₄ umgewandelt. Hierbei ist man in der Lage eine Dünnsäure (10-20 %) zu produzieren. Es handelt sich hierbei um ein Nassverfahren, das jedoch nur in einem begrenzten Umfang SO₂ zu H₂SO₄ umwandeln kann. Die SO₂ Eingangskonzentration ist wirtschaftlich nur bis zu ca. 2500 ppm interessant, da sonst die Aktivkohleschichtdicken extrem ansteigen und einen hohen Druckverlust mit sich bringen. Auch bleibt der Wirkungsgrad einer klassischen SULFACID® Anlage dadurch relativ gering (ca. 90-95%). Außerdem steigt der Platzbedarf solcher Anlagen extrem, so dass klassische Sulfacid®-Anlagen von den Investitions- und Betriebskosten im Nachteil sind. Diese Tatsache wird umso deutlicher, je größer die Anlagen vom Volumenstrom her sind.

In mehreren Verfahren wird die katalytische Entfernung von Schwefeldioxid aus Abgasen in einem mit Aktivkohle beaufschlagten Reaktor durchgeführt, wobei der Katalysator immer wieder mit Wasser oder einer wasserhaltigen Lösung gewaschen wird und anschließend wieder getrocknet wird.

Der Katalysator wird so lange mit SO₂ beaufschlagt bis die Umwandlung von SO₂ abnimmt, dann wird die Zufuhr von SO₂ abgeschaltet und der Katalysator mit Wasser beaufschlagt und das H₂SO₄ wird ausgewaschen. Der Katalysator wird anschließend getrocknet und kann dann wiederverwendet werden.

Solche Verfahren sind z.B. aus US 3,486,852; US 4,122,150; US 5 679 238 oder US 2012/251404 A1 bekannt.

Der Nachteil dieser letzten Verfahren besteht darin, dass der Katalysator immer wieder mit Wasser abgewaschen und anschließend wieder getrocknet werden muss. Ein kontinuierliches Verfahren ist demnach nicht möglich und es müssen demnach immer mindestens zwei Reaktoren im Wechselbetrieb gefahren werden.

Des Weiteren kann mit den obengenannten Verfahren nur schwach konzentrierte Schwefelsäure erhalten werden, die dann entweder verklappt wird oder aber aufwändig hoch konzentriert werden muss, um dann auf den Markt gebracht zu werden. Ein weiteres Verfahren des Standes der Technik ist aus US 4,140,752 bekannt.

### Aufgabe der Erfindung

Eine Aufgabe der vorliegenden Erfindung ist es, ein kontinuierliches Verfahren bereit zu stellen, SO₂ bei niedrigen Temperaturen aus Abgasen zu entfernen.

### Allgemeine Beschreibung der Erfindung

Diese Aufgabe wird erfindungsgemäß gelöst durch ein Verfahren zur katalytischen Entfernung von Schwefeldioxid aus Abgasen in zwei Reaktoren, wobei der erste Reaktor mit einem Aktivkohlekatalysator beaufschlagt ist. Das Verfahren umfasst die folgenden Schritte:
a. Bereitstellen eines Abgases mit einem Wassergehalt von weniger als 1g H₂O/Nm³ und einem SO₂ Gehalt von mindestens 5 ppm
b. Einführung der Abgase in einen ersten Reaktor,
c. katalytische Umwandlung des SO₂ in gasförmiges SO₃ im ersten Reaktor durch den Aktivkohlekatalysator wobei die katalytische Umwandlung auf dem Aktivkohlekatalysator bei einer Temperatur von unter 100°C erfolgt,
d. Einführung der vorgereinigten Abgase aus dem ersten Reaktor in einen zweiten Reaktor,
e. Umwandlung des SO₃ mit Wasser in H₂SO₄ im zweiten Reaktor.

Das Verfahren arbeitet zuverlässig unter allen Betriebsbedingungen.

Das Verfahren erlaubt es, Abgase aus industriellen Anlagen kontinuierlich zu behandeln, die vor allem Schwefeldioxid (SO₂) als Schadstoff enthalten und dieses Schwefeldioxid in einem Verfahren ganz bzw. zu einem erheblichen Teil aus den Abgasen zu entfernen und dabei letztendlich in flüssige H₂SO₄ umzuwandeln.

In einem ersten Reaktor werden die trocknen Abgase in den Reaktor eingeführt und das SO₂ wird an den Aktivkohlekatalysator angelagert und in SO₃ umgewandelt. Diese katalytische Umwandlung erfolgt auf einem Aktivkohlekatalysator bei einer Temperatur unter 100°C. Entgegen dem was bisher angenommen wurde, ist es jedoch nicht notwendig, das SO₃ vom Aktivkohlekatalysator abzuwaschen. Wenn die Abgase und der Katalysator trocken sind, wird das Schwefeldioxid auf dem Aktivkohlekatalysator in SO₃ umgewandelt und wird dann auch wieder gasförmig ausgetragen. Eine Sättigung des Katalysators mit SO₃ findet nicht statt, d.h. die Aktivität des Aktivkohlekatalysators bleibt konstant.

Es ist demnach nicht notwendig den Aktivkohlekatalysator mit Wasser oder einer wässerigen Lösung abzuspülen.

Das gewonnene SO₃ Gas wird erst in einem zweiten Reaktor mit H₂O in Kontakt gebracht und so in H₂SO₄ umgewandelt.

Diese Umwandlung von SO₃ in H₂SO₄ kann nach einem bekannten Verfahren durchgeführt werden. Hier kann sehr wenig Wasser eingesetzt werden und somit eine höher konzentrierte Säure gewonnen werden als in dem SULFACID Verfahren.

Es ist zu bemerken, dass die zu behandelnden Abgase trocken sein müssen, d.h. möglichst wenig Wasser enthalten. Die zu behandelnden Abgase enthalten bevorzugt höchstens 0.8 g Wasser pro Nm³ Abgas, besonders bevorzugt höchstens 0.7 g Wasser pro Nm³ Abgas, und insbesondere höchstens 0.4 g Wasser pro Nm³ Abgas. Ist der Wassergehalt zu hoch oder ist der Katalysator feucht, wird das entstandene SO₃ sofort auf dem Aktivkohlekatalysator in H₂SO₄ umgewandelt und bleibt am Aktivkohlekatalysator. Nach einiger Zeit nimmt die Aktivität des Aktivkohlekatalysators ab, d.h. die Umwandlung von SO₂ nimmt ab.

Ein weiterer Vorteil dieses Verfahrens besteht darin, dass der Aktivkohlekatalysator länger hält, da er nicht mehr H₂SO₄ ausgesetzt wird und auch nicht abwechselnd gewässert und getrocknet werden muss.

Ein weiterer Vorteil dieses Verfahrens besteht darin, dass Abgase mit einer Konzentration bis 180'000 ppm SO₂ bevorzugt höchstens 130'000 ppm, besonders bevorzugt höchstens 110'000 ppm, und insbesondere höchstens 100'000 ppm behandelt werden können. Dieses Verfahren erlaubt es also, Abgase mit einer wesentlich niedrigeren Schadstoffkonzentration zu behandeln als die traditionellen Kontaktverfahren und Abgase mit einer wesentlich höheren Schadstoffkonzentration zu behandeln als die traditionellen SULFACID Verfahren.

Die Eingangstemperaturen der Abgase liegen vorzugsweise zwischen der Umgebungstemperatur und 150 °C. Höhere Temperaturen im Dauerbetrieb könnten den Katalysator auf Dauer schädigen. Bei Bedarf kann der Aktivkohlekatalysator gekühlt werden, in dem man z. B. eine Kühlschlange in den Aktivkohlekatalysator im Reaktor anbringt.

Der Gasdruck der Abgase am Eingang des ersten Reaktors ist bevorzugt zwischen 800 und 1400 mbar, besonders bevorzugt zwischen 900 und 1100 mbar und insbesondere zwischen 950 und 1050 mbar und somit relativ nah am Atmosphären-Druck,

Da dieses Verfahren bei niedrigen Temperaturen abläuft, müssen die Reaktoren nicht aus Edelstahl bestehen, wie z. B. in den Kontaktverfahren, sondern können kostengünstig aus z. B. Fiberglas hergestellt werden.

Beim Verfahren werden mindestens 60 Vol.% des in den Abgasen enthaltenen SO₂ umgewandelt, bevorzugt mindestens 75 Vol.%, besonders bevorzugt mindestens 90 Vol.% und insbesondere mindestens 98 Vol.%.

Der Sauerstoffgehalt der Abgase ist eigentlich nicht kritisch, er sollte jedoch idealerweise mindestens 2 Vol.% betragen, bevorzugt mindestens 5 Vol.%, besonders bevorzugt mindestens 8 Vol.%, und insbesondere mindestens 10 Vol.% betragen.

Bevorzugterweise sollte der O₂-Gehalt mehr als 8 mal höher als der SO₂-Gehalt liegen.

Bei dem Aktivkohlekatalysator handelt es sich bevorzugt um einen natürlichen Torfaktivkohle- oder extrudierten Holzaktivkohlekatalysator, zum Beispiel: Norit-RST3, PK 2.5, Calgon Carbon - Centaur HSV, Jacobi-Ecosorb G-SWC80, VRX-Super, CPPE 25, CPPE 30.

Ein weiterer Vorteil des Verfahrens liegt darin, dass die erhaltene Schwefelsäure hoch konzentriert sein kann, d.h. es kann Schwefelsäure erhalten werden mit einer Konzentration von mindestens 10 Gew.%, bevorzugt mindestens 50 Gew.%, besonders bevorzugt 70 Gew.% und insbesondere mindestens 96 Gew.%.

In einer bevorzugten Ausführung wird verdünnte Schwefelsäure benutzt für die Umwandlung von SO₃ in H₂SO₄.

Das Verfahren kann in einem ersten Reaktor ausgeführt werden, welcher ein Aktivkohlekatalysatorbett oder eine Vielzahl von parallel oder seriell geschalteten Aktivkohlekatalysatorbetten umfasst.

### Kurze Beschreibung der Figuren

Weitere Einzelheiten und Vorteile der Erfindung können der nachfolgenden ausführlichen Beschreibung verschiedener möglicher Ausführungsformen der Erfindung anhand der beiliegenden Figuren entnommen werden. Diese zeigen:
Fig. 1 eine schematische Darstellung einer ersten Versuchsanordnung,
Fig. 2 eine schematische Darstellung einer zweiten Versuchsanordnung,
Fig. 3 eine schematische Darstellung einer dritten Versuchsanordnung,
Fig. 4 eine schematische Darstellung einer vierten Versuchsanordnung,
Fig. 5 und Fig. 6 eine graphische Darstellung der bei Versuchen gemessenen Werte vom SO₂ -Gehalt der Abgase am Eintritt des Reaktors bzw. Austritt des Reaktors.

### Beschreibung einer Ausgestaltung der Erfindung

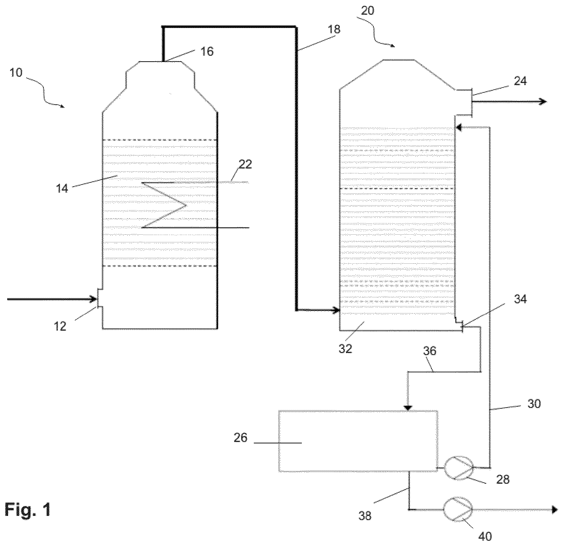

Die in der Figur 1, zur Illustration der Erfindung, gezeigte erste Versuchsanordnung umfasst einen Festbettreaktor 10, in dessen unteren Teil über einen Eingang 12, ein SO₂-haltiges Abgas zugeführt wird. Das Abgas wird von unten nach oben durch ein Festbett 14 mit einem Aktivkohlekatalysator geleitet und wird aus dem oberen Teil des Reaktors 10 durch einen Ausgang 16 über eine Leitung 18 in einen Absorber 20 geleitet.

Im Festbettreaktor 10 wird mit Hilfe des Aktivkohlekatalysators das gasförmige SO₂ in gasförmiges SO₃ umgewandelt. Im Gegensatz zu den bekannten Verfahren wird das SO₃ nicht am Aktivkohlekatalysator angelagert und in H₂SO₄ umgewandelt, sondern es wird nach der Reaktion wieder als Gas abgegeben. Die Umwandlung von SO₂ in SO₃ geschieht praktisch 1:1 also zu ungefähr 100% d.h. SO₂ verschwindet (fast) komplett aus den Abgasen und wird durch die gleiche Menge an SO₃ ersetzt.

Im Festbett 14 ist eine Heiz/Kühlschlange 22 angebracht, um die Temperatur im Festbett 14 zu regeln. Es wird darauf geachtet, dass die Temperatur im Festbett 14 nicht über 100°C steigt, um den Aktivkohlekatalysator zu schonen und seine Lebensdauer nicht unnötig zu verkürzen.

Nach ihrem Austritt aus dem Festbettreaktor 10 werden die vorgereinigten Abgase in einen Absorber 20 geleitet und dort durch eine Waschlösung aus 30-98% H₂SO₄ geführt. Bevorzugt wird 96% Schwefelsäure eingesetzt. Die vorgereinigten Abgase werden über die Leitung 18 in den unteren Bereich des Absorbers 20 eingeleitet und steigen durch die flüssige Schwefelsäure auf und werden anschliessend als Reingas durch einen Ausgang 24 am Kopfende des Absorbers 20 entnommen.

Das gasförmige SO₃ löst sich demnach in der flüssigen Schwefelsäure. Dabei bildet sich schnell Dischwefelsäure H₂S₂O₇, welche mit dem Wasser welches in der Schwefelsäure enthalten ist, reagiert, um H₂SO₄ zu bilden. Dies ist eine klassische Methode um SO₃ in H₂SO₄ umzuwandeln.

Aus einem Tank 26, über eine Pumpe 28 und durch eine Leitung 30 wird flüssige, verdünnte Schwefelsäure in den Kopfbereich des Absorbers 20 eingebracht. Die Schwefelsäure wird aus dem Sumpf 32 des Absorbers 20 abgeleitet und fliesst über einen Ausgang 34 und eine Leitung 36 in den Tank 26 zurück.

Über eine weitere Leitung 38 mit einer Pumpe 40 kann die gewonnene Schwefelsäure aus dem Tank 26 abgepumpt werden. Bei diesem Verfahren wird die Schwefelsäure also konzentriert, denn das in der Schwefelsäure gelöste Wasser wird nach und nach verbraucht um SO₃ in H₂SO₄ um zu wandeln. Hat die Schwefelsäure im Tank 26 die gewünschte Konzentration erreicht, wird ein Teil davon abgepumpt und entsprechend durch Wasser / verdünnte Schwefelsäure ersetzt.

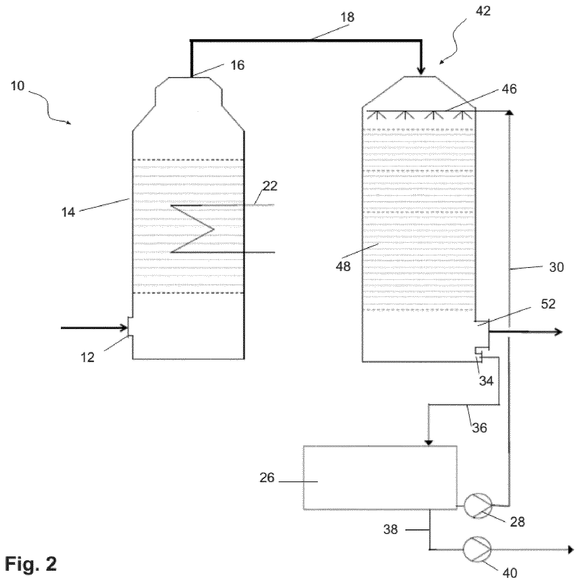

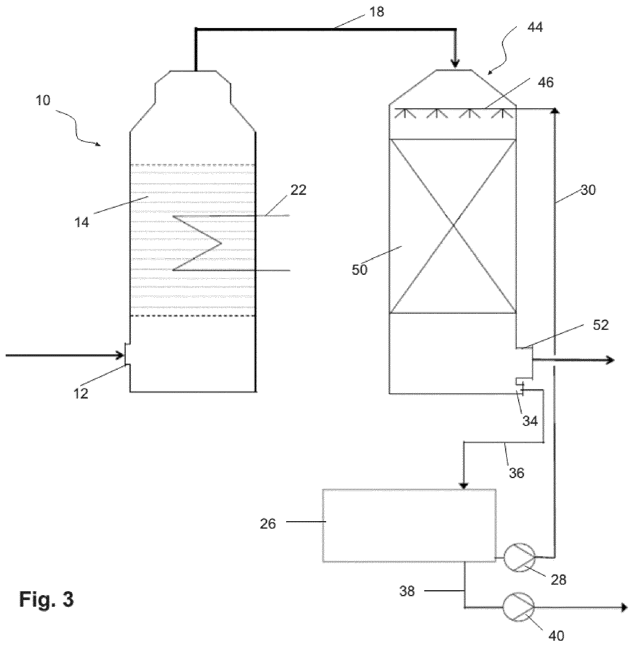

Die in den Figuren 2 und 3 gezeigten Versuchsanordnungen unterscheiden sich von der Versuchsanordnung aus der Figur 1 dadurch, dass der Absorber 20- als zweiter Reaktor - durch einen Abscheider 42 (Fig. 2) bzw. durch einen SULFACID Reaktor 44 (Fig. 3) ersetzt wird. Beide Reaktoren 42, 44 sind mit Feststoffen gefüllt. Der Abscheider 42 der Figur 2 enthält ein Festbett aus Plastikfüllmaterial 48 (Beispiel: VFF Acidur® Spezialsteinzeug) während der SULFACID Reaktor 54 ein Festbett aus Aktivkohle 50 enthält.

Bei diesen Reaktoren 42, 44 wird das vorgereinigte Abgas vom ersten Reaktor 10 in den Kopfbereich der Reaktoren 42, 44 geleitet. Auch hier wird die verdünnte Schwefelsäure aus dem Tank 26 über eine Pumpe 28 durch eine Leitung 30 in den Kopfbereich des Abscheiders 42 bzw. des SULFACID Reaktors 44 eingebracht. In diesen beiden Ausführungen ist im Kopfbereich des Abscheiders 42 bzw. des SULFACID Reaktors 44 eine Sprühvorrichtung 46 angebracht, durch die eine gleichmässige Verteilung der verdünnten Schwefelsäure auf dem Plastikfüllmaterial 48 des Abscheiders 42 bzw. auf der Aktivkohle 50 des SULFACID Reaktors 44 erreicht wird.

Das vorgereinigte Abgas wird nicht wie auf der Figur 1 im Gegenstromverfahren mit der verdünnten Schwefelsäure in Kontakt gebracht, sondern im Gleichstrom. Das vorgereinigte Abgas wird demnach über eine Leitung 18 im Kopfbereich des Abscheiders 42 bzw. des SULFACID Reaktors 44 eingebracht und nach der Reaktion als Reingas im unteren Bereich des Abscheiders 42 bzw. des SULFACID Reaktors 44 durch einen Ausgang 52 abgezogen.

Auch in diesen Reaktoren 42, 44 wird das gasförmige SO₃ in der flüssigen Schwefelsäure gelöst. Dabei bildet sich schnell Dischwefelsäure H₂S₂O₇ welche mit dem Wasser, das in der Schwefelsäure enthalten ist, reagiert um H₂SO₄ zu bilden.

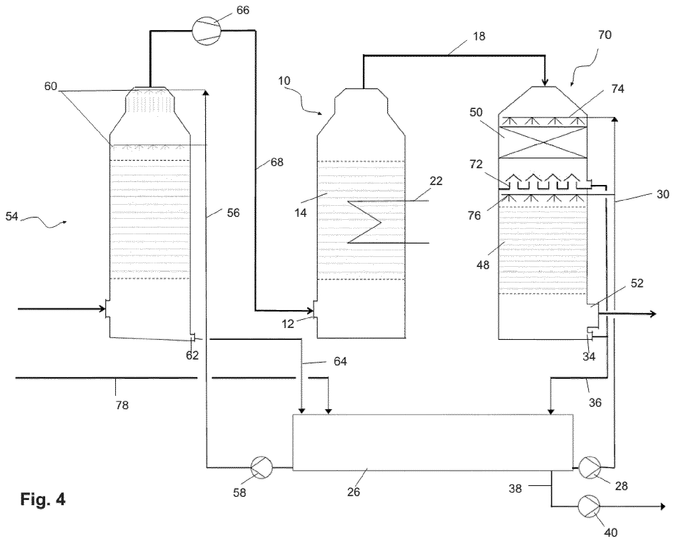

Die Figur 4 zeigt nun einen etwas komplexeren Versuchsaufbau wobei der Reaktor 10 den Reaktoren 10 auf den vorherigen Figuren entspricht. In dieser Versuchsanordnung werden die SO₂-haltigen Abgase in einem Trockenturm 54 getrocknet, bevor sie in den Reaktor 10 eingeleitet werden.

Der Trockenturm 54 entspricht in seinem Aufbau in den grossen Linien dem Absorber 20 der Figur 1. Dieser Trockenturm 54 befindet sich allerdings stromaufwärts vom Reaktor 10 und dient dazu den SO₂-haltigen Abgasen das Wasser zu entziehen, bevor sie in den Reaktor 10 gelangen.

Die SO₂-haltigen Abgase werden demnach in den unteren Bereich des Trockenturms 54 eingeleitet und dort im Gegenstrom mit Schwefelsäure getrocknet. Die Schwefelsäure mit einer Konzentration von 30 Gew % bis 98% Gew% wird aus dem Tank 26 in den Kopfbereich des Trockenturms 54 über eine Leitung 56, eine Pumpe 58 und Sprühvorrichtungen 60 eingebracht.

Die Schwefelsäure wird - nachdem sie den SO₂-haltigen Abgasen das Wasser entzogen hat - über eine Leitung 64 aus dem Sumpf des Trockenturms 54 durch einen Ausgang 62 wieder zurück in den Tank 26 geleitet.

Die in dem Trockenturm 54 getrockneten SO₂-haltigen Abgase werden aus dem Kopfbereich des Trockenturms 54 abgezogen und über ein Gebläse 66 und eine Leitung 68 durch den Eingang 12 in den unteren Bereich des Reaktors 10 eingebracht.

Im Festbettreaktor 10 wird mit Hilfe des Aktivkohlekatalysators das gasförmige SO₂ in gasförmiges SO₃ umgewandelt. Im Festbett 14 des Reaktors 10 ist eine Heiz/Kühlschlange 22 angebracht, um die Temperatur im Festbett 14 zu regeln.

Nach ihrem Austritt aus dem Festbettreaktor 14 werden die vorgereinigten Abgase d.h. SO₃-haltigen Abgase in den Kopfbereich eines Reaktors 70 eingebracht und dort im Gleichstrom durch eine Waschlösung aus 30-98% H₂SO₄ geführt. Bevorzugt wird 96% Schwefelsäure eingesetzt. Nach der Reaktion wird das gereinigte Abgas als Reingas im unteren Bereich durch einen Ausgang 52 aus dem Reaktor 70 abgezogen.

Der Reaktor 70 weist hier zwei übereinander liegende Zonen auf, wobei in der oberen Zone ein SULFACID Reaktor 44 und in den unteren Zonen einem Abscheider 42 angeordnet ist. Beide Zonen sind durch einen Tropfenfänger 72 von einander getrennt.

Schwefelsäure wird aus dem Tank 26 durch eine Leitung über eine Pumpe 28 an eine Sprühvorrichtung 74 geführt, der sich oberhalb des SULFACID-Reaktors befindet, wodurch die Schwefelsäure durch das Aktivkohlebett des SULFACID-Reaktors rieselt und das im Abgas gelöste SO₃ aufnimmt und in Schwefelsäure umgewandelt. Die angereicherte Schwefelsäure sammelt sich auf dem Tropfenfänger 72 und wird von dort zurück in den Tank 26 geleitet.

Des Weiteren wird Schwefelsäure aus dem Tank 26 über die gleiche Pumpe 28 und die gleiche Leitung 30 unterhalb des Tropfenabscheiders auf das Bett des Abscheiders durch eine weitere Sprühvorrichtung 76 gesprüht. Das restliche, sich in dem Abgas befindliche SO₃, wird dann innerhalb des Abscheiders von der Schwefelsäure aufgenommen und durch die Reaktion mit dem in Schwefelsäure gelösten Wasser in Schwefelsäure umgewandelt. Die Schwefelsäure wird anschliessend durch den Ausgang 34 im Sumpf des Reaktors 70 durch die Leitung 36 zurück in den Tank 26 geleitet.

Hat die Schwefelsäure im Tank 36 die gewünschte Konzentration erreicht, wird ein Teil davon aus dem Tank über die Leitung 38 und die Pumpe 40 abgepumpt und entsprechend durch Wasser / verdünnte Schwefelsäure das durch die Leitung 76 herbei geführt wird, ersetzt.

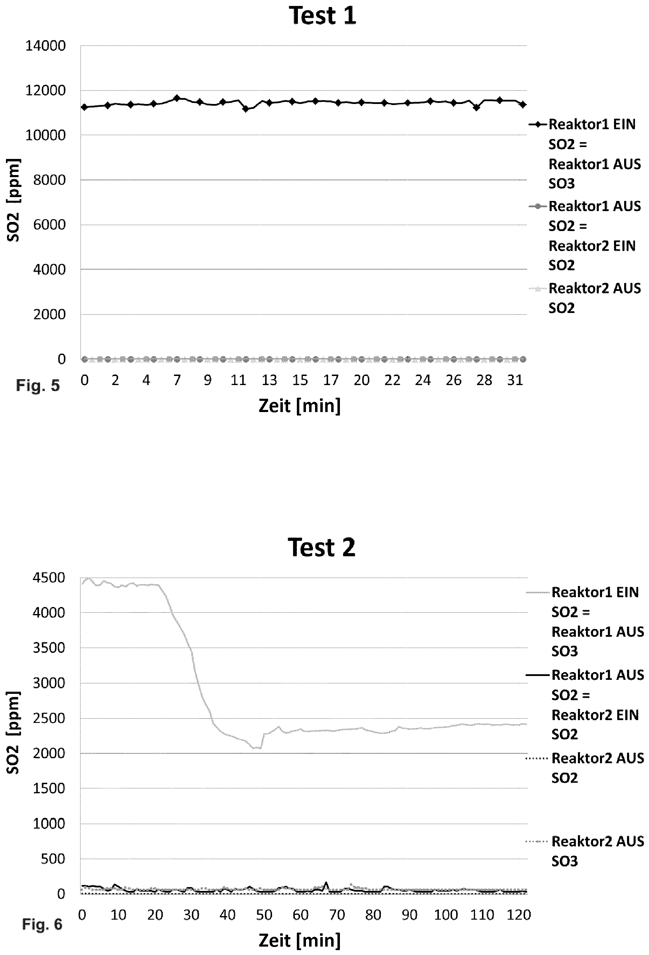

Die Fig. 5 zeigt Resultate aus einer ersten Versuchsreihe in der ein Rauchgas aus einer Kontaktanlage mit einem Wassergehalt von weniger als 0.2 g H₂O/Nm³ und einem SO₂ Gehalt von zwischen 11000 und 12000 ppm SO₂ in einer Anlage mit zwei Reaktoren, wie in der Figur 3 dargestellt behandelt wurde.

Im ersten Reaktor aus einem Glasfaserverstärkter Kunststoff, welcher ein Volumen von 3 m³ aufwies und mit einem Festbett aus 2 m³ Aktivkohlekatalysators Norit-RST3, PK 2.5, Calgon Carbon - Centaur HSV, Jacobi-Ecosorb G-SWC80, VRX-Super, CPPE 25, CPPE 30.ausgestattet war wurde das SO₂ komplett in gasförmiges SO₃ umgewandelt.

Bei diesen Katalysatoren handelt es sich um ein Aktivkohlegranulat, bzw. Formkohle, mit einer Körnung zwischen 1-3 mm; 2-4 mm bzw. 3-5 mm und durch Dampfaktivierung hergestellt wurde. Folgende allgemeine Eigenschaften werden vom Hersteller zugesichert: Jodzahl 800; Methylenblauadsorption 11 g/100 g; Innere Oberfläche (B.E.T) 875 m²/g; Schüttdichte 260 kg/m³; Dichte nach Rückspülen 230 kg/m³; Gleichförmigkeitsgrad 1,3 - Aschegehalt 7 Gew.-%; pH alkaline; Feuchte (verpackt) 2 Gew.-%

Die Temperatur der Abgase lag zwischen 20 °C und 30 °C am Eingang und zwischen 20 °C und 30 °C am Ausgang des ersten Reaktors.

Die so behandelten Abgase wurden anschliessend in einen zweiten Reaktor eingeleitet. Beim zweiten Reaktor handelt es sich um einen SULFACID Reaktor welcher ein Volumen von 2 m³ aufwies und mit 1 m³ Aktivkohle der Marke Norit-RST3, PK 2.5, Calgon Carbon - Centaur HSV, Jacobi-Ecosorb G-SWC80, VRX-Super, CPPE 25, CPPE 30 gefüllt war.

Bei diesen Katalysatoren handelt es sich um ein Aktivkohlegranulat, bzw. Formkohle, mit einer Körnung zwischen 1-3 mm; 2-4 mm bzw. 3-5 mm und welches durch Dampfaktivierung hergestellt wurde. Folgende allgemeine Eigenschaften werden vom Hersteller zugesichert: Jodzahl 800; Methylenblauadsorption 11 g/100 g; Innere Oberfläche (B.E.T) 875 m²/g; Schüttdichte 260 kg/m³; Dichte nach Rückspülen 230 kg/m³; Gleichförmigkeitsgrad 1,3 - Aschegehalt 7 Gew.-%; pH alkaline; Feuchte (verpackt) 2 Gew.-%

Die Aktivkohle im zweiten Reaktor wurde mit 25 l Schwefelsäure einer Konzentration von 1000 g/l alle 15 Minuten besprüht.

Diese Testreihe dauerte ungefähr 30 Minuten und es wurden ungefähr 150 Nm³ Abgase behandelt.

Die Fig. 6 zeigt Resultate aus einer zweiten Versuchsreihe in der gleichen Anlage wie bei der ersten Versuchsreihe.

In dieser Versuchsreihe wurden SO₂-haltige Abgase aus der gleichen Kontaktanlage wie bei der ersten Versuchsreihe eingesetzt. Der SO₂-Gehalt der Abgase war allerdings niedriger (zwischen 4500 ppm und 2500 ppm).

Der Versuch dauerte ungefähr 120 Minuten und es wurden ungefähr 600 Nm³ Abgase behandelt.

Bei den Versuchen wurden Rauchgasanalysegeräte der Marke Testo verwendet. Die Geräte sind neuerer Generation (Baujahr 2009) und wurden vom Hersteller kalibriert. Außerdem wurden bei den Versuchen die Analysedaten dieser Rauchgasanalysegeräte mit parallel durchgeführten nasschemischen Messungen bestätigt. Die Ergebnisse lagen für alle Messungen in den zulässigen Abweichungstoleranzen.

Diese beiden Versuche zeigen, dass das SO₂ aus den Abgasen im ersten Reaktor (fast) ganz in SO₃ umgewandelt wurde und das SO₃ erst im zweiten Reaktor (fast) ganz in H₂SO₄ umgewandelt wurde.

Durch die rasche und komplette Umwandlung von gasförmigen SO₂ in gasförmiges SO₃ im ersten Reaktor fand eine Sättigung des Aktivkohlekatalysators im ersten Reaktor nicht statt.

| | | | |
|---|---|---|---|
| **Zeichenerklärung:** | | 76 | Sprühvorrichtung |
| | | 78 | Sprühvorrichtung |
| 10 | Reaktor | | |
| 12 | Eingang | | |
| 14 | Festbett | | |
| 16 | Ausgang | | |
| 18 | Leitung | | |
| 20 | Absorber | | |
| 22 | Heiz/Kühlschlange | | |
| 24 | Ausgang | | |
| 26 | Tank | | |
| 28 | Pumpe | | |
| 30 | Leitung | | |
| 32 | Sumpf | | |
| 34 | Ausgang | | |
| 36 | Leitung | | |
| 38 | Leitung | | |
| 40 | Pumpe | | |
| 42 | Abscheider | | |
| 44 | SULFACID Reaktor | | |
| 46 | Sprühvorrichtung | | |
| 48 | Plastikfüllmaterial | | |
| 50 | Aktivkohle | | |
| 52 | Ausgang | | |
| 54 | Trockenturm | | |
| 56 | Leitung | | |
| 58 | Pumpe | | |
| 60 | Sprühvorrichtungen | | |
| 62 | Ausgang | | |
| 64 | Leitung | | |
| 66 | Gebläse | | |
| 68 | Leitung | | |
| 70 | Reaktor | | |
| 72 | Tropfenfänger | | |
| 74 | Sprühvorrichtung | | |

## Patentansprüche

1. Verfahren zur katalytischen Entfernung von Schwefeldioxid aus Abgasen in zwei Reaktoren wobei der erste Reaktor mit einem Aktivkohlekatalysator beaufschlagt ist, **gekennzeichnet, durch** die folgenden Schritte:
a. Bereitstellen eines Abgases mit einem Wassergehalt von weniger als 1g H₂O/Nm³ und einem SO₂ Gehalt von mindestens 5 ppm
b. Einführung der Abgase in einen ersten Reaktor,
c. katalytische Umwandlung des SO₂ in gasförmiges SO₃ im ersten Reaktor durch den Aktivkohlekatalysator wobei die katalytische Umwandlung auf dem Aktivkohlekatalysator bei einer Temperatur von unter 100°C erfolgt,
d. Einführung der vorgereinigten Abgase aus dem ersten Reaktor in einen zweiten Reaktor,
e. Umwandlung des SO₃ mit Wasser in H₂SO₄ im zweiten Reaktor.

2. Verfahren nach Anspruch 1, **dadurch gekennzeichnet, dass** die zu behandelnden Abgase höchstens 0.8 g Wasser pro Nm³ Abgas, bevorzugt höchstens 0.7 g Wasser pro Nm³ Abgas, und höchstens 0.4 g Wasser pro Nm³ Abgas enthalten.

3. Verfahren nach Anspruch 1 oder 2, **dadurch gekennzeichnet, dass** der SO₂-Gehalt der Abgase höchstens 180'000 ppm beträgt bevorzugt höchstens 130'000 ppm, besonders bevorzugt höchstens 110'000 ppm, und insbesondere höchstens 100'000 ppm.

4. Verfahren nach einem der vorhergehenden Ansprüche, **dadurch gekennzeichnet, dass** die Eingangstemperatur der Abgase zwischen der Umgebungstemperatur und 150°C liegt.

5. Verfahren nach einem der vorhergehenden Ansprüche, **dadurch gekennzeichnet, dass** der Gasdruck der Abgase am Eingang des ersten Reaktors zwischen 800 und 1400 mbar liegt.

6. Verfahren gemäss einem der vorhergehenden Ansprüche, **dadurch gekennzeichnet, dass** mindestens 60 Vol.% des in den Abgasen enthaltenen SO₂ umgewandelt, bevorzugt mindestens 75 Vol.%, besonders bevorzugt mindestens 90 Vol.% und insbesondere mindestens 98 Vol.%.

7. Verfahren nach einem der vorhergehenden Ansprüche, **dadurch gekennzeichnet, dass** der O₂-Gehalt der Abgase mindestens 2 Vol.% beträgt, bevorzugt mindestens 5 Vol.%, besonders bevorzugt mindestens 8 Vol.%, und insbesondere mindestens 10 Vol.% beträgt.

8. Verfahren nach einem der vorhergehenden Ansprüche, **dadurch gekennzeichnet, dass** der O₂-Gehalt mehr als 8 mal höher als der SO₂-Gehalt liegt.

9. Verfahren nach einem der vorhergehenden Ansprüche, **dadurch gekennzeichnet, dass** es sich bei dem Aktivkohlekatalysator um einen natürlichen Torfaktivkohleaktivkohlekatalysator oder um einen extrudierten Holzaktivkohlekatalysator handelt.

10. Verfahren gemäss einem der vorhergehenden Ansprüche, **dadurch gekennzeichnet, dass** eine H₂SO₄-Säure von mindestens 10 Gew.% ausgetragen wird, bevorzugt mindestens 50 Gew.%, besonders bevorzugt 70 Gew.% und insbesondere mindestens 96 Gew.%.

11. Verfahren gemäss einem der vorhergehenden Ansprüche, **dadurch gekennzeichnet, dass** das Verfahren in einem ersten Reaktor ausgeführt wird, welcher ein Aktivkohlekatalysatorbett umfasst.

12. Verfahren nach einem der Ansprüche 1 bis 10, **dadurch gekennzeichnet, dass** das Verfahren in einem ersten Reaktor ausgeführt wird, welcher eine Vielzahl von parallel geschalteten Aktivkohlekatalysatorbetten umfasst.

13. Verfahren nach einem der Ansprüche 1 bis 10, **dadurch gekennzeichnet, dass** das Verfahren in einem ersten Reaktor ausgeführt wird, welcher eine Vielzahl von seriell geschalteten Aktivkohlekatalysatorbetten umfasst.

## Claims

1. A method for the catalytic removal of sulfur dioxide from waste gases in two reactors, the first reactor being charged with an activated carbon catalyst, **characterised by** the following steps:
a. provision of a waste gas with a water content of less than 1 g H₂O/Nm³ and an SO₂ content of at least 5 ppm,
b. introduction of the waste gases into a first reactor,
c. catalytic conversion of the SO₂ into gaseous SO₃ in the first reactor by the activated carbon catalyst, wherein the catalytic conversion on the activated carbon catalyst proceeds at a temperature of below 100°C,
d. introduction of the prepurified waste gases from the first reactor into a second reactor,
e. conversion of the SO₃ with water into H₂SO₄ in the second reactor.

2. A method according to claim 1, **characterised in that** the waste gases to be treated contain at most 0.8 g water per Nm³ waste gas, preferably at most 0.7 g water per Nm³ waste gas, and at most 0.4 g water per Nm³ waste gas.

3. A method according to claim 1 or 2, **characterised in that** the SO₂ content of the waste gases amounts to at most 180,000 ppm, preferably at most 130,000 ppm, particularly preferably at most 110,000 ppm, and in particular at most 100,000 ppm.

4. A method according to one of the preceding claims, **characterised in that** the inlet temperature of the waste gases is between ambient temperature and 150°C.

5. A method according to one of the preceding claims, **characterised in that** the gas pressure of the waste gases at the inlet to the first reactor is between 800 and 1400 mbar.

6. A method according to one of the preceding claims, **characterised in that** at least 60 vol.%, preferably at least 75 vol.%, particularly preferably at least 90 vol.% and in particular at least 98 vol.% of the SO₂ present in the waste gases is converted.

7. A method according to one of the preceding claims, **characterised in that** the O₂ content of the waste gases amounts to at least 2 vol.%, preferably at least 5 vol.%, particularly preferably at least 8 vol.%, and in particular at least 10 vol.%.

8. A method according to one of the preceding claims, **characterised in that** the O₂ content is more than 8 times higher than the SO₂ content.

9. A method according to one of the preceding claims, **characterised in that** the activated carbon catalyst is a natural peat activated carbon catalyst or an extruded wood activated carbon catalyst.

10. A method according to one of the preceding claims, **characterised in that** an H₂SO₄ acid of at least 10 wt.%, preferably at least 50 wt.%, particularly preferably 70 wt.% and in particular at least 96 wt.% is discharged.

11. A method according to one of the preceding claims, **characterised in that** the method is carried out in a first reactor which comprises an activated carbon catalyst bed.

12. A method according to one of claims 1 to 10, **characterised in that** the method is carried out in a first reactor which comprises a plurality of activated carbon catalyst beds connected in parallel.

13. A method according to one of claims 1 to 10, **characterised in that** the method is carried out in a first reactor which comprises a plurality of activated carbon catalyst beds connected in series.

## Revendications

1. Procédé qui est destiné à éliminer par catalyse, dans deux réacteurs, le dioxyde de soufre contenu dans des gaz de combustion, le premier réacteur étant pourvu d'un catalyseur de charbon actif, et qui est **caractérisé par** les étapes suivantes :
a. mise à disposition de gaz de combustion dont la teneur en eau est inférieure à 1 g H₂O/Nm³ et dont la teneur en SO₂ est supérieure ou égale à 5 ppm
b. introduction des gaz de combustion dans un premier réacteur,
c. conversion du SO₂ en SO₃ gazeux, dans le premier réacteur, par le catalyseur de charbon actif, la conversion catalytique sur le catalyseur de charbon actif étant réalisée à une température inférieure à 100 °C,
d. introduction des gaz de combustion prépurifiés, issus du premier réacteur, dans un deuxième réacteur,
e. conversion du SO₃ en H₂SO₄, au moyen d'eau, dans le deuxième réacteur.

2. Procédé selon la revendication 1, **caractérisé en ce que** les gaz de combustion à traiter contiennent au maximum 0,8 g d'eau par Nm³ de gaz de combustion, de préférence au maximum 0,7 g d'eau par Nm³ de gaz de combustion, et au maximum 0,4 g d'eau par Nm³ de gaz de combustion.

3. Procédé selon la revendication 1 ou 2, **caractérisé en ce que** les gaz de combustion présentent une teneur en SO₂ inférieure ou égale à 180.000 ppm, de préférence inférieure ou égale à 130.000 ppm, avec une préférence particulière inférieure ou égale à 110.000 ppm, et notamment inférieure ou égale à 100.000 ppm.

4. Procédé selon l'une des revendications précédentes, **caractérisé en ce que** la température d'entrée des gaz de combustion est comprise entre la température ambiante et 150 °C.

5. Procédé selon l'une des revendications précédentes, **caractérisé en ce qu'**à l'entrée du premier réacteur, les gaz de combustion présentent une pression entre 800 et 1400 mbar.

6. Procédé selon l'une des revendications précédentes, **caractérisé en ce qu'**au moins 60 % en volume du SO₂ contenu dans les gaz de combustion subissent la conversion, de préférence au moins 75 % en volume, avec une préférence particulière au moins 90 % en volume, et notamment au moins 98 % en volume.

7. Procédé selon l'une des revendications précédentes, **caractérisé en ce que** les gaz de combustion présentent une teneur en O₂ supérieure ou égale à 2 % en volume, de préférence supérieure ou égale à 5 % en volume, avec une préférence particulière supérieure ou égale à 8 % en volume, et notamment supérieure ou égale à 10 % en volume.

8. Procédé selon l'une des revendications précédentes, **caractérisé en ce que** la teneur en O₂ est plus de 8 fois supérieure à la teneur en SO₂.

9. Procédé selon l'une des revendications précédentes, **caractérisé en ce que** le catalyseur de charbon actif est un catalyseur de charbon actif naturel à base de charbon actif de tourbe ou un catalyseur de charbon actif extrudé à base de bois.

10. Procédé selon l'une des revendications précédentes, **caractérisé en ce qu'**en sortie, on obtient un acide H₂SO₄ à au moins 10 % en poids, de préférence à au moins 50 % en poids, avec une préférence particulière à 70 % en poids, et notamment à au moins 96 % en poids.

11. Procédé selon l'une des revendications précédentes, **caractérisé en ce que** le procédé est réalisé dans un premier réacteur comprenant un lit de catalyseur de charbon actif.

12. Procédé selon l'une des revendications 1 à 10, **caractérisé en ce que** le procédé est réalisé dans un premier réacteur comprenant une pluralité de lits de catalyseur de charbon actif disposés parallèlement.

13. Procédé selon l'une des revendications 1 à 10, **caractérisé en ce que** le procédé est réalisé dans un premier réacteur comprenant une pluralité de lits de catalyseur de charbon actif disposés en série.
